(19) Europäisches Patentamt
European Patent Office
Office européen des brevets

(11) **EP 3 554 089 A1**

(12) **DEMANDE DE BREVET EUROPEEN**

(43) Date de publication:
**16.10.2019 Bulletin 2019/42**

(51) Int Cl.:
*H04N 21/236* (2011.01)   *H04H 20/67* (2008.01)
*H04H 60/40* (2008.01)   *H04N 21/23* (2011.01)
*H04N 21/234* (2011.01)   *H04N 21/61* (2011.01)

(21) Numéro de dépôt: **19176916.5**

(22) Date de dépôt: **17.12.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363096**

(62) Numéro(s) de document de la (des) demande(s) initiale(s) en application de l'article 76 CBE:
**14815334.9 / 3 085 098**

(71) Demandeurs:
• **Enensys Technologies**
**35510 Cesson Sévigné (FR)**
• **TDF**
**92120 Montrouge (FR)**

(72) Inventeurs:
• **POULAIN, Ludovic**
**35510 CESSON SEVIGNE (FR)**
• **DUPAIN, Pascal**
**92120 MONTROUGE (FR)**

(74) Mandataire: **Santarelli**
**49, avenue des Champs-Elysées**
**75008 Paris (FR)**

Remarques:
Cette demande a été déposée le 28-05-2019 comme demande divisionnaire de la demande mentionnée sous le code INID 62.

(54) **PROCEDE DE FILTRAGE ET DE SYNCHRONISATION DE FLUX AUDIOVISUELS POUR UNE DIFFUSION TERRESTRE SYNCHRONE**

(57)      L'invention concerne un procédé de filtrage et de synchronisation d'un flux audiovisuel pour une diffusion terrestre synchrone dans une plaque monofréquence. Le flux est reçu via une liaison le multiplexant avec un autre flux. Les paquets audiovisuels destinés à la diffusion terrestre synchrone sont filtrés. Des paquets comportant un compteur sont détectés parmi les paquets reçus. La durée entre deux paquets comportant un compteur est calculée. Les paquets entre les deux paquets sont comptés. Chaque paquet reçu est horodaté en fonction de la durée et du comptage. Des paquets comportant une information d'horloge de référence sont détectés, entre lesquels des paquets nuls sont insérés, chaque paquet nul étant horodaté. Un paquet nul est remplacé par un paquet filtré ayant un horodatage inférieur. Un paquet comportant un compteur est mis à jour dans le flux pour former un flux audiovisuel pour la diffusion terrestre synchrone dans une plaque mono fréquence.

Fig. 6d

**Description**

La présente invention concerne le domaine de la diffusion de programmes de télévision numérique et plus particulièrement le filtrage et la synchronisation d'au moins un flux audiovisuel pour une diffusion terrestre synchrone au sein d'au moins une plaque mono fréquence, le flux audiovisuel étant reçu via une liaison dans laquelle le au moins un flux audiovisuel est multiplexé avec au moins un autre flux audiovisuel diffusé par la liaison.

Dans la diffusion de programmes audiovisuels, les flux de données transmis sont marqués temporellement pour permettre une diffusion de ceux-ci.

Lorsqu'au moins un premier flux de données est multiplexé avec d'autres second flux de données, il arrive que le marquage temporel du au moins un premier flux de données soit modifié. Cette modification empêche un dispositif recevant le au moins un flux de données multiplexé de pouvoir retrouver le marquage temporel original du au moins un flux de données. Le dispositif recevant le au moins un flux de données multiplexé avec les seconds flux de données ne peut alors pas synchroniser le au moins un flux premier flux de données pour, par exemple et de manière non limitative, une diffusion SFN (pour *Single Frequency Network* en anglais).

La diffusion SFN se caractérise en ce que la diffusion des services est effectuée par l'émission d'un même flux de données par différents émetteurs sur une seule et même fréquence de modulation. De ce fait, il est nécessaire que ces différents émetteurs reçoivent exactement le même contenu et soient finement synchronisés entre eux pour éviter de générer des interférences dans les endroits se trouvant à la jonction des zones de couverture des différents émetteurs.

Cette synchronisation entre les différents émetteurs SFN peut, par exemple, être réalisée par l'insertion dans le flux distribué à ces émetteurs de paquets de synchronisation tels que les paquets T2-MI *timestamp* (*T2-Modulator Interface*) en anglais qui correspondent dans la norme DVB-T2 aux étiquettes temporelles, et MIP pour (*Mega-frame Initialization Packet* en anglais) utilisées dans les normes DVB-H et DVB-T. Ce mécanisme est décrit dans le document : « Digital Video Broadcasting (DVB); DVB mega-frame for Single Frequency Network (SFN) synchronization Modulator Interface (T2-MI) for a second génération digital terrestrial télévision broadcasting System (DVB-T2)» de l'ETSI (European Télécommunications Standards Institute en anglais) sous la référence ETSI TS 102 773 V1.1.1 (2009-09). Le point d'émission recevant le flux se synchronise alors sur le flux reçu, par exemple à l'aide de ces paquets T2-MI de type *DVB-T2 timestamp.* Nous appelons cette synchronisation du point d'émission sur le flux reçu entraînant la synchronisation entre eux de tous les points d'émission, la synchronisation SFN du point d'émission.

La diffusion SFN se caractérise par la définition de plaques SFN. Une plaque SFN est une zone géographique couverte par un ensemble d'émetteurs dont le nombre est supérieur ou égal à un. Ces émetteurs sont finement synchronisés et émettent exactement le même flux de données sur la même fréquence.

La présente invention vise à permettre à un dispositif recevant le au moins un flux de données multiplexé avec les seconds flux de données de synchroniser le au moins un premier flux de données pour une diffusion de celui-ci.

L'invention concerne également un procédé de filtrage et de synchronisation d'au moins un flux audiovisuel pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison, caractérisé en ce que le procédé comporte les étapes de :

- filtrage parmi les paquets reçus via la au moins une liaison des paquets audiovisuels destinés à la diffusion terrestre synchrone au sein d'au moins une plaque mono fréquence,
- horodatage des paquets filtrés,
- détection de paquets comportant un compteur, calcul de la durée entre deux paquets comportant un compteur et comptage des paquets entre les deux paquets comportant un compteur,
- détection de paquets comportant au moins une information représentative d'une horloge de référence commune précise,
- insertion de paquets nuls entre chaque paquet comportant au moins une information représentative d'une horloge de référence commune précise,
- horodatage de chaque paquet nul,
- remplacement d'un (voire chaque) paquet nul horodaté par un paquet filtré si le paquet nul a un horodatage supérieur à celui du paquet reçu filtré,
- mise à jour d'au moins un paquet comportant un compteur dans le flux audiovisuel pour former un flux audiovisuel pour la diffusion terrestre synchrone au sein d'au moins une plaque mono fréquence.

L'invention concerne aussi un dispositif de filtrage et de synchronisation d'un flux audiovisuel pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison.

Le dispositif comporte :

- des moyens de filtrage parmi les paquets reçus via la au moins une liaison des paquets audiovisuels destinés à la diffusion terrestre synchrone au sein d'au moins une plaque mono fréquence,
- des moyens d'horodatage des paquets filtrés,
- des moyens de détection de paquets comportant un compteur, calcul de la durée entre deux paquets comportant un compteur et comptage des paquets entre les deux paquets comportant un compteur,
- des moyens de détection de paquets comportant au moins une information représentative d'une horloge de référence commune précise,
- des moyens d'insertion de paquets nuls entre chaque paquet comportant au moins une information représentative d'une horloge de référence commune précise,
- des moyens d'horodatage de chaque paquet nul,
- des moyens de remplacement d'un paquet nul horodaté par un paquet filtré si le paquet nul a un horodatage supérieur à celui du paquet reçu filtré,
- des moyens de mise à jour d'au moins un paquet comportant un compteur dans le flux audiovisuel pour former un flux audiovisuel pour la diffusion terrestre synchrone au sein d'au moins une plaque mono fréquence.

Ainsi, il est possible de synchroniser le flux audiovisuel pour une diffusion de celui-ci.

Selon un mode particulier de réalisation de l'invention, le procédé comporte en outre une étape de mise en conformité du flux audiovisuel pour la diffusion terrestre synchrone au sein d'au moins une plaque mono fréquence à une norme de transmission.

Selon un mode particulier de réalisation de l'invention, plusieurs tables sont insérées dans le flux audiovisuel pour la diffusion terrestre synchrone au sein d'au moins une plaque mono fréquence à une périodicité qui dépend de la périodicité d'au moins un bit du compteur.

Selon un mode particulier de réalisation de l'invention, au moins une liaison est une liaison satellitaire.

Selon un autre mode particulier de réalisation de l'invention, le procédé comprend en outre une étape de détection dans le flux audiovisuel d'au moins un paquet comportant une information représentative du nombre de jours écoulés depuis une date prédéterminée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1a illustre un premier exemple d'architecture d'un système utilisant une liaison satellitaire pour transférer des flux DVB à des dispositifs de diffusion terrestres selon la présente invention;
la Fig. 1b illustre un second exemple d'architecture d'un système utilisant deux liaisons satellitaires pour transférer des flux DVB à des dispositifs de diffusion terrestres selon la présente invention;
la Fig. 2 représente un module de génération d'un étiquetage temporel pour une diffusion terrestre synchrone au sein d'une plaque mono fréquence;
la Fig. 3 représente un dispositif de synchronisation d'au moins un flux reçu par une liaison satellitaire pour une diffusion terrestre synchrone au sein d'une plaque mono fréquence;
la Fig. 4a représente un exemple d'algorithme de transfert d'au moins un flux d'un flux DVB par l'intermédiaire d'une liaison satellite pour une diffusion terrestre synchrone au sein d'une plaque mono fréquence selon un premier exemple d'architecture;
la Fig. 4b représente un exemple d'algorithme de transfert de deux flux DVB par l'intermédiaire d'une liaison satellite pour une diffusion terrestre synchrone au sein d'une plaque mono fréquence selon le second exemple d'architecture;
la Fig. 5 représente un exemple d'algorithme d'étiquetage temporel pour une diffusion terrestre synchrone au sein d'une plaque mono fréquence;
les Figs. 6a à 6f représentent des exemples d'algorithme de synchronisation d'au moins un flux reçu par une liaison satellitaire pour une diffusion terrestre synchrone au sein d'une plaque mono fréquence.

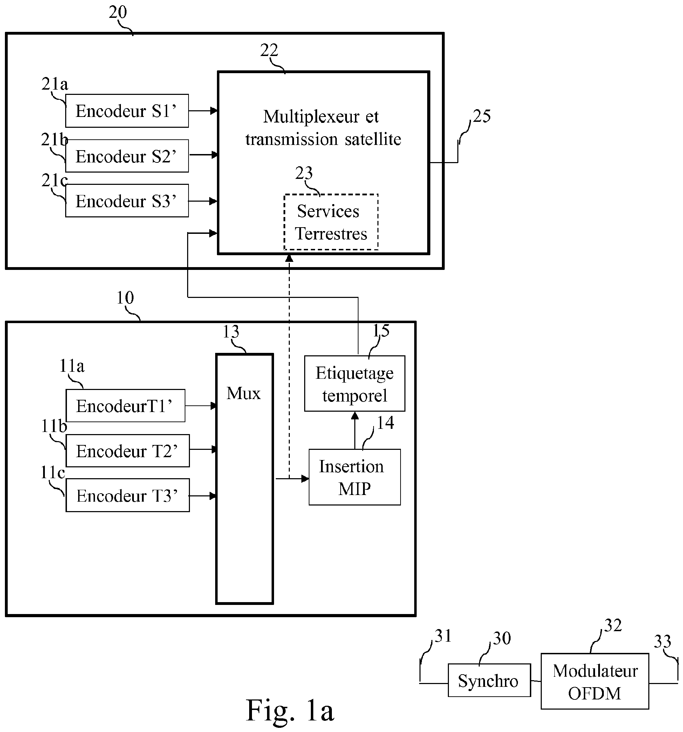

La **Fig. 1a** illustre un premier exemple d'architecture d'un système utilisant une liaison satellitaire pour transférer des flux DVB à des dispositifs de diffusion terrestres selon la présente invention.

Le système comporte un dispositif de formation d'au moins un flux DVB 10 pour une diffusion terrestre synchrone au sein d'au moins une plaque mono fréquence.

Le dispositif de formation d'au moins un flux DVB 10 comporte une pluralité d'encodeurs de flux audiovisuels 11a à 11c. Les sorties des encodeurs de flux audiovisuels 11a à 11c sont reliées à un multiplexeur 13 qui multiplexe les différents flux audiovisuels produits par les encodeurs 11a et 11c. La sortie du multiplexeur 13 est reliée à un module d'insertion de paquets MIP 14, acronyme de « Mega frame Initialization packet » ou en français paquet d'initialisation de méga trame. La sortie du module d'insertion de paquets MIP 14 est reliée à un module d'étiquetage temporel 15.

Le module d'insertion de paquets MIP 14 insère dans le multiplexe délivré par le multiplexeur 13, des paquets MIP tels que décrits dans la norme ETSI TS 101 191. Chaque paquet MIP indique le début d'une méga trame et comporte une information représentative d'une horloge de référence commune précise, typiquement une horloge GPS, acronyme de « Global Positioning System ». Le flux ainsi formé est un flux DTT, acronyme de «Digital Terrestrial Television ». Le module d'étiquetage temporel 15 insère dans le flux DTT un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR tels que décrits dans la norme ISO 13818-1, est préférentiellement introduit dans le flux DTT à la place de paquets nuls du flux DTT à une périodicité de l'ordre de 40ms.

PCR est l'acronyme de « Program Clock Reference ».

Le flux DTT ainsi modifié est transféré à un dispositif de diffusion par satellite d'au moins un flux DVB 20.

Le dispositif de diffusion par satellite d'au moins un flux DVB 20 comporte une pluralité d'encodeurs de flux audiovisuels 21a à 21c. Les sorties des encodeurs de flux audiovisuels 21a à 21c sont reliées à un module de multiplexage et de transmission satellite 22. Le module de multiplexage et de transmission satellite 22 multiplexe les différents flux audiovisuels produits par les encodeurs 21a et 21c ainsi que le flux TDT reçu du dispositif de formation d'au moins un flux DVB 10. La sortie du multiplexeur module de multiplexage et de transmission satellite 22 est reliée à une antenne d'émission 25.

Les flux de données transmis par l'antenne 25 sont reçus par un dispositif de synchronisation et de filtrage 30 via une liaison satellite et par l'intermédiaire d'une antenne 31.

Le dispositif de synchronisation et de filtrage 30 traite au moins les paquets contenant un champ PCR insérés par le module d'étiquetage temporel 15 de manière à fournir une synchronisation qui permet à un modulateur OFDM (32) d'effectuer une diffusion terrestre synchrone au sein d'une plaque mono fréquence.

En variante, les modules d'insertion de paquets MIP 14 et d'étiquetage temporel 15 sont, au lieu d'être compris dans le dispositif de formation d'au moins un flux DVB 10, implémentés dans le dispositif de formation d'au moins un flux DVB 20 sous la référence 23 en Fig. la.

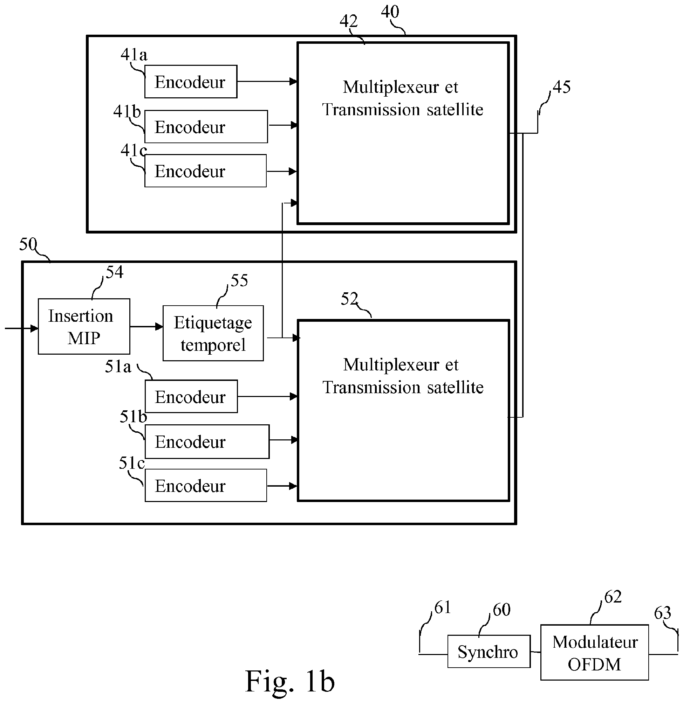

La **Fig.** 1**b** illustre un second exemple d'architecture d'un système utilisant deux liaisons satellitaires pour transférer des flux DVB à des dispositifs de diffusion terrestres selon la présente invention.

Le système comporte deux dispositifs de diffusion par satellite 40 et 50 qui diffusent chacun au moins un flux DVB 20 pour une diffusion terrestre synchrone au sein d'au moins une plaque mono fréquence.

Le dispositif de diffusion par satellite d'un flux DVB 40 comporte une pluralité d'encodeurs de flux audiovisuels 41a à 41c. Les sorties des encodeurs de flux audiovisuels 41a à 41c sont reliées à un module de multiplexage et de transmission satellite 42. Le module de multiplexage et de transmission satellite 42 multiplexe les différents flux audiovisuels produits par les encodeurs 41a et 41c ainsi que le flux comportant des paquets MIP et des paquets comportant un étiquetage temporel insérés selon la présente invention par le module d'étiquetage temporel décrit ultérieurement. La sortie du module de multiplexage et de transmission satellite 42 est reliée à l'antenne d'émission 45.

Le dispositif de diffusion par satellite d'un flux DVB 50 comporte une pluralité d'encodeurs de flux audiovisuels 51a à 51c. Les sorties des encodeurs de flux audiovisuels 51a à 51c sont reliées à un module de multiplexage et de transmission satellite 52.

Le module de multiplexage temporel 52 est aussi relié à un module d'étiquetage temporel 55 ainsi qu'à un module d'insertion de paquets MIP 54.

Le module d'insertion de paquets MIP 54 insère dans un flux, par exemple constitué de paquets nuls, des paquets MIP tels que décrits dans la norme ETSITS 101 191. Chaque paquet MIP indique le début d'une méga trame et comporte une information représentative d'une horloge de référence commune précise, typiquement une horloge GPS, acronyme de « Global Positioning System ». La sortie du module d'insertion de paquets MIP 54 est reliée à un module d'étiquetage temporel 55.

Le module d'étiquetage temporel 55 effectue dans le flux délivré par le module d'insertion de paquets MIP 54 un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR tels que décrits dans la norme ISO 13818-1, est préférentiellement introduit dans le flux délivré par le module d'insertion de paquets MIP à la place de paquets nuls du flux délivré par le module d'insertion de paquets MIP à une périodicité de l'ordre de 40ms.

Le flux ainsi modifié est transféré au dispositif de diffusion par satellite d'au moins un flux DVB 40.

La sortie du module de multiplexage et de transmission satellite 52 est reliée à une antenne 55 pour diffusion du flux de données.

Le flux de données transmis par l'antenne 45 et le flux de données transmis par l'antenne 55 sont reçus par un dispositif de synchronisation et de filtrage 60 via deux liaisons satellites et par l'intermédiaire d'une ou plusieurs antennes 61.

Le dispositif de synchronisation et de filtrage 60 traite au moins les paquets contenant un champ PCR insérés par le module d'étiquetage temporel 55 de manière à fournir une synchronisation qui permet à un modulateur OFDM 62 d'effectuer une diffusion terrestre synchrone au sein d'une plaque mono fréquence.

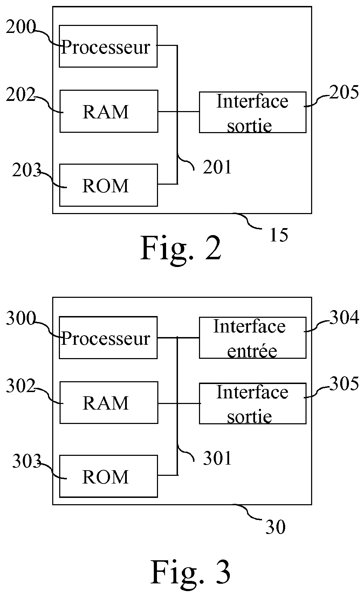

La **Fig. 2** représente un module de génération d'un étiquetage temporel pour une diffusion terrestre synchrone au sein d'une plaque mono fréquence.

Le dispositif de génération d'un étiquetage temporel 15 ou 55 comporte un bus de communication 201 auquel sont reliés un processeur 200, une mémoire non volatile 203, une mémoire vive 202, une interface de communication ou d'entrée 204 avec le multiplexeur 11 et une interface de communication ou de sortie 205 avec le modulateur 15.

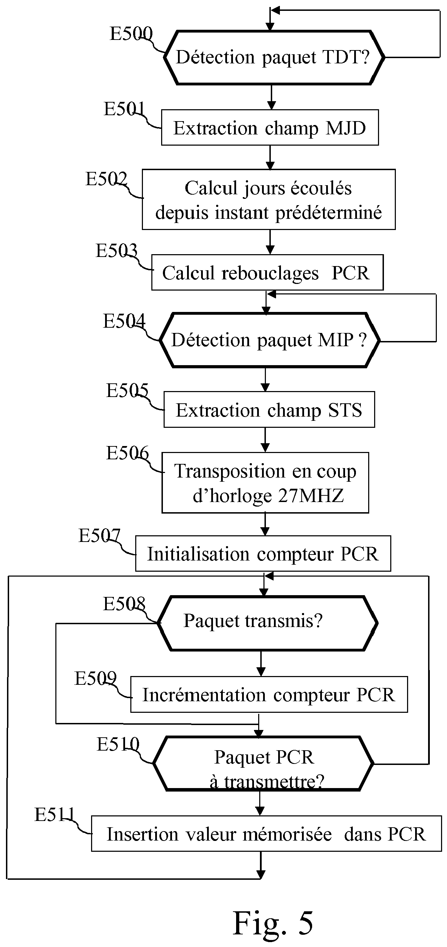

La mémoire non volatile 203 mémorise les modules logiciels mettant en oeuvre l'invention, ainsi que les données permettant de mettre en oeuvre l'algorithme qui sera décrit par la suite en référence à la Fig. 5.

De manière plus générale, les programmes selon la présente invention sont mémorisés dans un moyen de stockage. Ce moyen de stockage est lisible par le microprocesseur 200.

Lors de la mise sous tension du dispositif de génération d'un étiquetage temporel 15 ou 55, les modules logiciels selon la présente invention sont transférés dans la mémoire vive 202 qui contient alors le code exécutable de l'invention ainsi que les données nécessaires à la mise en oeuvre de l'invention.

Par l'intermédiaire de l'interface 205, le dispositif de génération d'un étiquetage temporel 15 transfère le flux DTT ainsi modifié au dispositif de formation d'au moins un flux DVB 20 pour une diffusion par satellite.

Par l'intermédiaire de l'interface 205, le dispositif de génération d'un étiquetage temporel 55 transfère le flux ainsi modifié aux modules de multiplexage et de transmission satellite 42 et 52.

Tout ou partie des étapes de l'algorithme décrit par la suite en regard de la Fig. 5 peut être implémenté par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gate Array*) ou un ASIC (*Application-Specific Integrated Circuit*).

En d'autres mots, le dispositif de génération d'un étiquetage temporel 15 ou 55 comporte de la circuiterie qui permet au dispositif de génération d'un étiquetage temporel 15 ou 55 d'exécuter les étapes de l'algorithme de la Fig. 5.

La **Fig. 3** représente un dispositif de synchronisation et de filtrage d'au moins un flux reçu par une liaison satellitaire pour une diffusion terrestre synchrone au sein d'une plaque mono fréquence.

Le dispositif de synchronisation et de filtrage 30 ou 60 comporte un bus de communication 301 auquel sont reliés un processeur 300, une mémoire non volatile 303, une mémoire vive 302, une interface de réception de signaux et une interface de sortie 305 avec le modulateur OFDM 32.

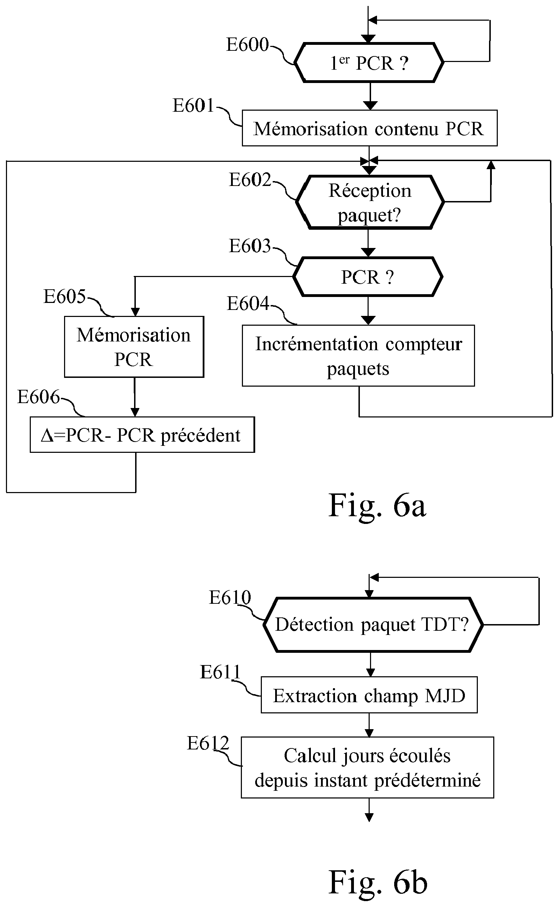

La mémoire non volatile 303 mémorise les modules logiciels mettant en oeuvre l'invention, ainsi que les données permettant de mettre en oeuvre l'algorithme qui sera décrit par la suite en référence aux Figs. 6a à 6f.

De manière plus générale, les programmes selon la présente invention sont mémorisés dans un moyen de stockage. Ce moyen de stockage est lisible par le microprocesseur 300.

Lors de la mise sous tension du dispositif de synchronisation et de filtrage 30 ou 60, les modules logiciels selon la présente invention sont transférés dans la mémoire vive 302 qui contient alors le code exécutable de l'invention ainsi que les données nécessaires à la mise en oeuvre de l'invention.

Par l'intermédiaire de l'interface 304, le dispositif de synchronisation 30 ou 60 reçoit au moins un flux satellite par l'intermédiaire de l'antenne 31 ou 61.

Par l'intermédiaire de l'interface 305, le dispositif de synchronisation et de filtrage 30 ou 60 transfère au moins un flux DVB au modulateur OFDM 32 qui effectue une diffusion terrestre synchrone du au moins un flux DVB au sein d'une plaque mono fréquence.

Tout ou partie des étapes des algorithmes décrits par la suite en regard des Figs. 6a à 6f peut être implémenté par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gate Array*) ou un ASIC (*Application-Specific Integrated Circuit*).

En d'autres mots, le dispositif de synchronisation et de filtrage 30 ou 60 comporte de la circuiterie qui permet au le dispositif de synchronisation et de filtrage 30 d'exécuter les étapes des algorithmes des Figs. 6a à 6e.

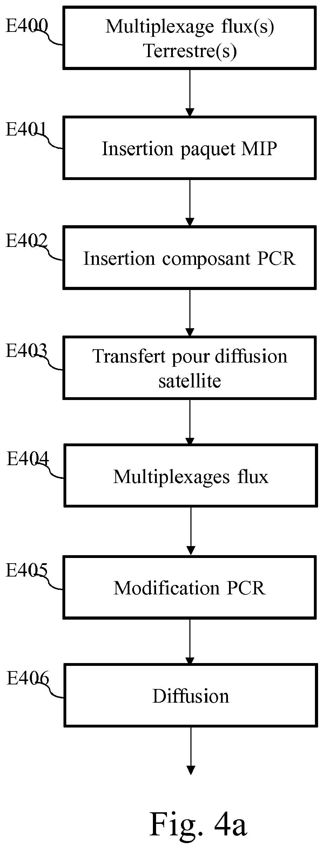

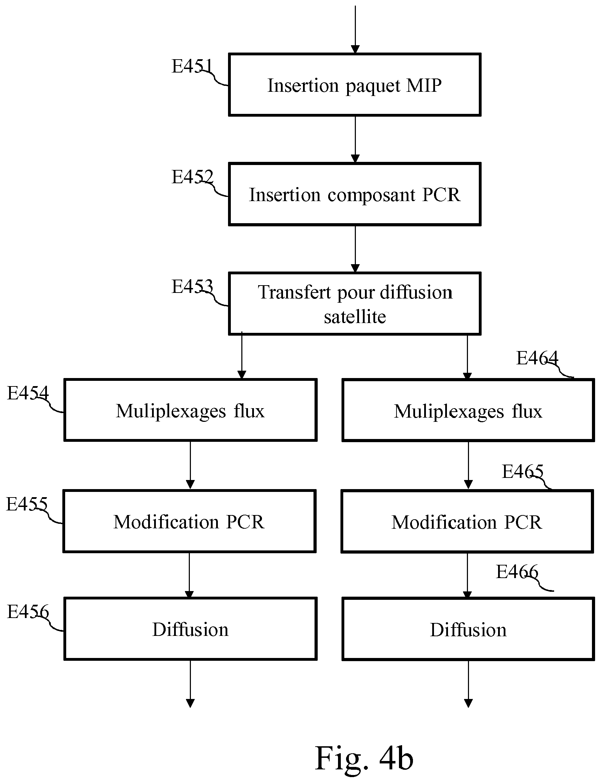

La **Fig. 4** représente un exemple d'algorithme de transfert d'au moins un flux d'un flux DVB par l'intermédiaire d'une liaison satellite pour une diffusion terrestre synchrone au sein d'une plaque mono fréquence selon le premier exemple d'architecture.

A l'étape E400, le dispositif de formation d'au moins un flux DVB 10 multiplexe les différents flux audiovisuels produits par les encodeurs 11a et 11c.

A l'étape E401, le dispositif de formation d'au moins un flux DVB 10 d'insère des paquets MIP d'initialisation de méga trame.

Chaque paquet MIP indique le début d'une méga trame et comporte une information représentative d'une horloge de référence commune précise, typiquement une horloge GPS. Le flux ainsi formé est un flux DTT.

A l'étape E402, le dispositif de formation d'au moins un flux DVB 10 effectue un étiquetage temporel.

Le dispositif de formation d'au moins un flux DVB 10 insère dans le flux DTT un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR, est préférentiellement introduit dans le flux DTT à la place de paquets nuls du flux DTT à une périodicité de l'ordre de 40ms qui peut être définie par l'utilisateur du dispositif de formation d'au moins un flux DVB 10.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant, différents des autres identifiants compris dans le flux DTT.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant qui identifie un service dit de référence.

L'étiquetage temporel sera décrit plus en détail en référence à la Fig. 5.

A l'étape E403, le dispositif de formation d'au moins un flux DVB 10 transfère le flux DTT au dispositif de diffusion par satellite d'au moins un flux DVB 20.

A l'étape E404, le dispositif de diffusion par satellite d'au moins un flux DVB 20 multiplexe les différents flux audiovisuels produits par les encodeurs 21a et 21c ainsi que le flux DTT reçu du dispositif de formation d'au moins un flux DVB 10.

A l'étape E405, le dispositif de diffusion par satellite d'au moins un flux DVB 20 modifie les paquets contenant un champ PCR d'au moins un flux conformément au multiplexage effectué à l'étape E44.

A l'étape E406, le dispositif de diffusion par satellite d'au moins un flux DVB 20 transfère le au moins un flux pour une diffusion satellite de celui-ci.

La **Fig. 4b** représente un exemple d'algorithme de transfert de deux flux DVB par l'intermédiaire d'une liaison satellite pour une diffusion terrestre synchrone au sein d'une plaque mono fréquence selon le second exemple d'architecture.

A l'étape E451, le dispositif de diffusion par satellite d'un flux DVB 50 insère des paquets MIP d'initialisation de méga trame dans un flux composé par exemple de paquets vides.

Chaque paquet MIP indique le début d'une méga trame et comporte une information représentative d'une horloge de référence commune précise, typiquement une horloge GPS.

A l'étape E452, le dispositif de diffusion par satellite d'un flux DVB 50 insère un étiquetage temporel.

Le dispositif de diffusion par satellite d'un flux DVB 50 insère dans le flux dans lequel les paquets MIP ont été insérés un étiquetage temporel qui permet à des dispositifs de diffusion terrestre d'effectuer une diffusion terrestre synchrone au sein d'une plaque mono fréquence.

L'étiquetage temporel, sous la forme de paquets contenant un champ PCR, est préférentiellement introduit dans le flux à la place de paquets nuls à une périodicité de l'ordre de 40ms qui peut être définie par l'utilisateur du dispositif de diffusion par satellite d'un flux DVB 50.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant, différent des autres identifiants des autres identifiants compris dans le flux.

Les paquets contenant un champ PCR utilisés comme étiquetage temporel permettant à des dispositifs de diffusion terrestre d'effectuer une diffusion terrestre synchrone au sein d'une plaque mono fréquence ont le même identifiant qui identifie un service dit de référence.

L'étiquetage temporel sera décrit plus en détail en référence à la Fig. 5.

A l'étape E453, le dispositif de diffusion par satellite d'un flux DVB 50 transfère le flux formé à l'étape E453 au dispositif de diffusion par satellite d'au moins un flux DVB 40 et au module de multiplexage et de transmission satellite 52.

A l'étape E454, le dispositif de diffusion par satellite d'un flux DVB 50 multiplexe les différents flux audiovisuels produits par les encodeurs 51a et 51c ainsi que le flux formé à l'étape E452.

A l'étape E455, le dispositif de diffusion par satellite d'un flux DVB 50 modifie les paquets contenant un champ PCR d'un flux conformément au multiplexage effectué à l'étape E454.

A l'étape E456, le dispositif de diffusion par satellite d'un flux DVB 50 transfère le flux pour une diffusion satellite de celui-ci.

A l'étape E464, le dispositif de diffusion par satellite d'un flux DVB 40 multiplexe les différents flux audiovisuels produits par les encodeurs 41a et 41c ainsi que le flux formé à l'étape E452.

A l'étape E465, le dispositif de diffusion par satellite d'un flux DVB 40 modifie les paquets contenant un champ PCR d'au moins un flux conformément au multiplexage effectué à l'étape E464.

A l'étape E466, le dispositif de diffusion par satellite d'un flux DVB 40 transfère le flux pour une diffusion satellite de celui-ci.

La **Fig. 5** représente un exemple d'algorithme d'étiquetage temporel pour une diffusion terrestre synchrone au sein d'une plaque mono fréquence.

Plus précisément, le présent algorithme est exécuté par le processeur 200 du module d'étiquetage temporel 15 ou 55.

A l'étape E500, le processeur 200 vérifie si un paquet du flux DTT reçu est un paquet TDT, acronyme de « Time and Date Table ». Les paquets TDT sont des paquets tels que décrits dans la norme EN 300 468 V1.8.1.

Si un paquet TDT est reçu, le processeur 200 passe à l'étape E501.

A l'étape E501, le processeur 200 extrait le champ MJD du paquet TDT détecté.

MJD est l'acronyme de « Modified Julian Date » et contient le nombre de jours écoulés depuis le 1er janvier 1900.

A l'étape suivante E502, le processeur 200 calcule le nombre de jours $Nb_{jour}$ écoulés depuis une date prédéterminée. La date prédéterminée est par exemple égale au 1er janvier 2013.

MJD(1er janvier 2013)= 56293 est la valeur du champ MJD au 1er janvier 2013.

$$Nb_{jour} = MJD - MJD(1^{er}\ janvier\ 2013).$$

A l'étape suivante E503, le processeur 200 détermine le nombre de rebouclages du compteur PCR. Le compteur PCR a une période de rebouclage ou en d'autres termes répétition de $2^{34}*300/27000000 = 190887{,}4354$ secondes. Par exemple, le processeur 200 calcule, dans un premier temps le nombre de secondes Durée écoulées depuis le 1er janvier 2013.

Durée= $Nb_{jour}*86400+3600*h+60*mn+sec$ où h, min et sec sont compris dans le champ MJD.

Le processeur 200 convertit ensuite Durée en nombre de coups d'horloge à 27MHz, $Durée_{27} = Durée * 27000000$

Le processeur 200 calcule ensuite $Nb_{clkPCR}$, le nombre de coups d'horloge à 27MHz équivalent à la période du compteur PCR.

Le compteur PCR comporte 33 bits de poids forts incrémenté à chaque fois que les 9 bits de poids faible du compteur atteignent la valeur 300 :

$$Nb_{clkPCR} = 2^{33} * 300$$

Enfin, le processeur 200 calcule le nombre de rebouclages du compteur PCR : $Nb_{RebouclagePCR} = Durée_{27}/Nb_{clkPCR}$.

A l'étape suivante E504, le processeur 200 vérifie si un paquet du flux DTT reçu est un paquet MIP.

Si un paquet MIP est reçu, le processeur 200 passe à l'étape E506.

A l'étape E505, le processeur 200 extrait le champ STS du paquet MIP détecté.

STS est l'acronyme de « Synchronization Time Stamp » et est décrit dans la norme ETSI 101-191.

Le champ STS est utilisé, selon la présente invention, comme valeur d'initialisation du compteur PCR pour le premier paquet d'étiquetage temporel pour une diffusion sur une plaque monofréquence. Le champ STS champ est exprimé en pas de 100 ns alors que le compteur PCR est exprimé selon une horloge à 27 MHz.

A l'étape E507, le processeur 200 transpose le contenu du champ STS en coups d'horloge à 27MHz.

$$STS_{27}(MIP(n)) = STS(MIP(n)) * 27/10$$

A l'étape suivante E507, le processeur 200 initialise le compteur PCR à la valeur suivante :

$$PCR_{27}(MIP(0)) =$$

$$(STS_{27} + Nb_{RebouclagePCR}(0) * Offset_{RebouclagePCR})modulo(27000000)$$

*où*

$$Offset_{RebouclagePCR} = 27000000 - (2^{33} * 300)modulo(27000000) =$$
$$27000000 - 19377600$$

A l'étape suivante E508, le processeur 200 vérifie si un paquet du flux DTT est reçu.

Si un paquet du flux DTT est reçu, le processeur 200 passe à l'étape suivante E509.

Si un paquet du flux DTT n'est pas reçu, le processeur 200 passe à l'étape E510.

A l'étape E509, le processeur 200 incrémente le compteur PCR du nombre de coups d'horloge à 27MHz équivalent à la durée théorique du paquet reçu.

A l'étape E510, le processeur 200 vérifie si un paquet contenant un champ PCR doit être transmis. Un paquet contenant un champ PCR est transmis environ toutes les 40 ms et est inséré à la place du premier paquet nul du flux DTT reçu. L'ensemble des paquets contenant un champ PCR insérés selon la présente invention ont un identifiant différent des identifiants des autres paquets transmis et forment un service dit de référence.

Si un paquet contenant un champ PCR doit être transmis, le processeur 200 passe à l'étape E511 et insère la valeur du compteur calculée à l'étape E509 dans le champ PCR du paquet à insérer et retourne à l'étape E507.

Si un paquet contenant un champ PCR ne doit pas être transmis, le processeur 200 retourne à l'étape E507.

Comme le compteur PCR et le champ STS s'appuient sur des horloges synchrones, les Champs PCR et STS ne dérivent pas au cours du temps. Ainsi, à chaque paquet MIP(n), nous avons les relations suivantes :

$$STS_{27}\big(MIP(n)\big) = STS\big(MIP(n)\big) * 27/10$$

$$PCR\big(MIP(n)\big) = PCR_{base}\big(MIP(n)\big) * 300 + PCR_{ext}\big(MIP(n)\big)$$

$$PCR_{mod}\big(MIP(n)\big) = PCR\big(MIP(n)\big)\,modulo(27000000)$$

*ainsi*

$$STS_{27}\big(MIP(n)\big) = \\ PCR_{mod}\big(MIP(n)\big) + \\ Nb_{RebouclagePCR}(0) * Offset_{RebouclagePCR}\,modulo(27000000)$$

Où $PCR_{base}(MIP(n))$ est un compteur en coups d'horloge à 27Mhz.

Ainsi, il est possible de vérifier à chaque paquet MIP que la génération du paquet MIP est correcte.

Les **Figs. 6a à 6f** représentent un exemple d'algorithme de synchronisation d'au moins un flux reçu par une liaison satellitaire pour une diffusion terrestre synchrone au sein d'une plaque mono fréquence.

Plus précisément, l'algorithme des Figs. 6a à 6e est exécuté par le processeur 300 du dispositif de synchronisation et de filtrage 30. Les étapes E619b à E621b ne sont pas exécutées par le processeur 300 du dispositif de synchronisation et de filtrage 30.

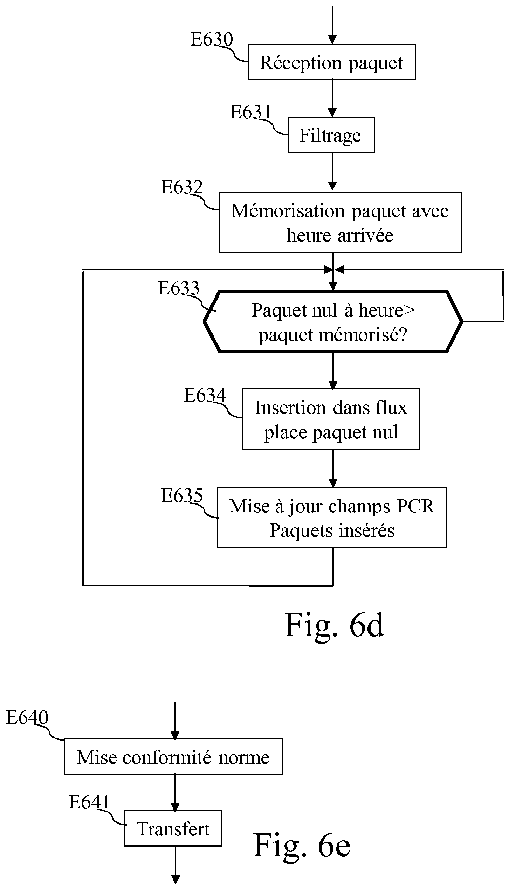

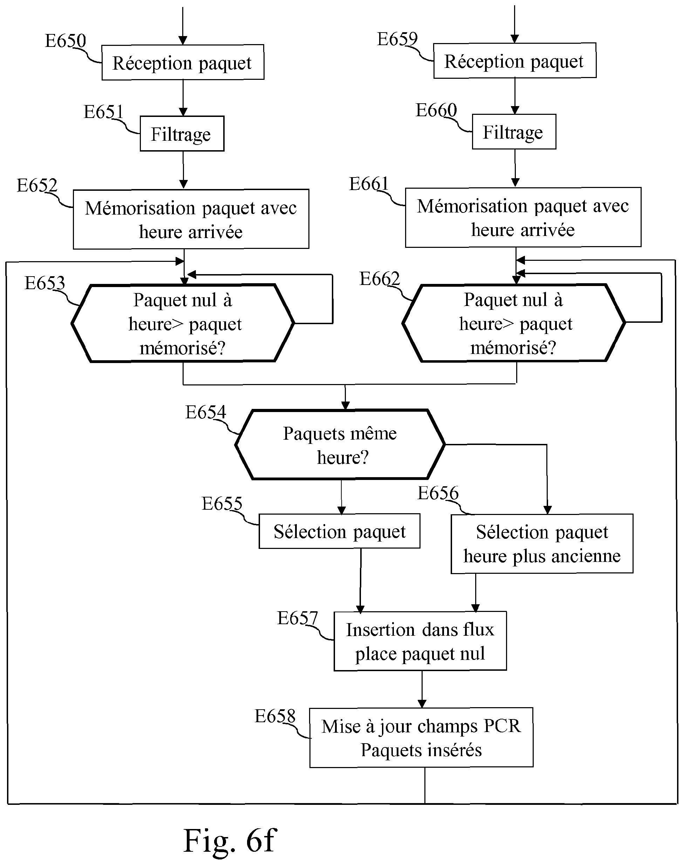

L'algorithme des Figs. 6a à 6c, 6e et 6f est exécuté par le processeur 300 du dispositif de synchronisation et de filtrage 60 pour un des flux reçus.

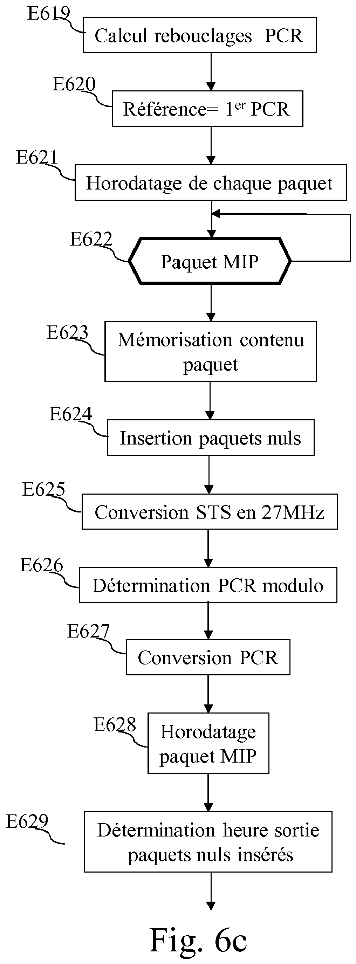

L'algorithme des Figs. 6a à 6b 6e et 6f ainsi que les étapes E619b à E621b de la Fig. 6c sont exécutés par le processeur 300 du dispositif de synchronisation et de filtrage 60 pour l'autre flux reçu.

A l'étape E600, le processeur 300 vérifie si un premier paquet appartenant au service de référence et contenant un champ PCR est reçu. Ces paquets seront notés par la suite REF(n,j).

Si un premier paquet contenant un champ PCR est reçu, le processeur 300 passe à l'étape E601.

A l'étape E601, le processeur 300 mémorise le contenu du champ PCR dans la mémoire vive 302.

A l'étape suivante E602, le processeur 300 détecte si un paquet est reçu.

Si un paquet est reçu, le processeur 300 passe à l'étape E603.

A l'étape E603, le processeur 300 vérifie si le paquet reçu est un paquet contenant un champ PCR et appartenant au service de référence. Si le paquet reçu est un paquet contenant un champ PCR et appartenant au service de référence, le processeur 300 passe à l'étape E605. Dans la négative, le processeur 300 passe à l'étape E604.

A l'étape E604, le processeur 300 incrémente un compteur de paquets et retourne à l'étape E602 déjà décrite.

A l'étape E605, le processeur 300 mémorise le contenu du champ PCR dans la mémoire vive 302.

A l'étape E606, le processeur 300 calcule la différence $\Delta$ entre les contenus des deux champs PCR précédemment reçus. Cette opération effectuée, le processeur 300 retourne à l'étape E602. La différence $\Delta$ est égale à $PCR_{in}(REF(n,j)) - PCR_{in}(REF(n - 1,i))$

L'algorithme de la Fig. 6b est exécuté par le processeur 300 en parallèle avec les étapes de l'algorithme de la Fig. 6a.

A l'étape E610, le processeur 300 vérifie si un paquet du flux DTT reçu est un paquet TDT, acronyme de « Time and Date Table ». Les paquets TDT sont des paquets tels que décrits dans la norme EN 300 468 V1.8.1.

Si un paquet TDT est reçu, le processeur 300 passe à l'étape E611.

A l'étape E611, le processeur 300 extrait le champ MJD du paquet TDT détecté.

MJD est l'acronyme de « Modified Julian Date » et contient le nombre de jours écoulés depuis le 1er janvier 1900.

A l'étape suivante E612, le processeur 300 calcule le nombre de jours $Nb_{jour}$ écoulés depuis une date prédéterminée. La date prédéterminée est par exemple égale au 1er janvier 2013.

MJD(1er janvier 2013)= 56293 est la valeur du champ MJD au 1er janvier 2013.

$$Nb_{jour} = MJD - MJD(1^{er}\ janvier\ 2013).$$

L'algorithme de la Fig. 6c est exécuté par le processeur 300 en parallèle avec les étapes de l'algorithme de la Fig. 6a.

A l'étape E619, le processeur 200 calcule le nombre de rebouclages du compteur PCR. Le compteur PCR a une période de rebouclage ou en d'autres termes répétition de $2^{34}*300/27000000 = 190887,4354$ secondes. Par exemple, le processeur 200 calcule, dans un premier temps le nombre de secondes Durée écoulées depuis le 1er janvier 2013.

Durée= $Nb_{jour}*86400+3600*h+60*mn+sec$ où h, min et sec sont compris dans le champ MJD.

Le processeur 200 convertie ensuite Durée en nombre de coups d'horloge à 27MHz, $Durée_{27} = Durée * 27000000$

Le processeur 200 calcule ensuite $Nb_{clkPCR}$, le nombre de coups d'horloge à 27MHz équivalents à la période du compteur PCR.

Le compteur PCR comporte 33 bits de poids forts incrémenté à chaque fois que les 9 bits de poids faible du compteur atteignent la valeur 300 :

$$Nb_{clkPCR} = 2^{33} * 300$$

Enfin, le processeur 200 calcule le nombre de rebouclages du compteur PCR : $Nb_{Rebouclage}PCR = Durée_{27}/Nb_{clkPCR}$.

A l'étape E620, le processeur 300 prend en tant que référence le contenu du premier paquet contenant un champ PCR mémorisé à l'étape E601.

A l'étape suivante E621, le processeur 300 horodate chaque paquet reçu à partir de la référence prise à l'étape E620 ainsi que la différence calculée à l'étape E605 de la Fig. 6a.

Le processeur 300 horodate chaque paquet du flux reçu et affecte à chaque paquet p une heure d'entrée $T_{in}(p)$.

Pour chaque paquet p, l'heure d'entrée est calculée de la manière suivante :

$$T_{in}(p) = PCR_{in}\big(REF(n-1,i)\big) + \left(\frac{(PCR_{in}(REF(n,j)) - PCR_{in}(REF(n-1,i)))}{N}\right) * N_i$$

N est le nombre paquets dans le flux reçu entre les paquets REF(n,j) et REF(n-1,i), c'est-à dire les paquets insérés à l'étape E42 de la Fig. 4. Le paquet REF(n-1,i) est le premier paquet inséré à l'étape E42 de la Fig. 4 précédent le paquet p et le paquet REF(n,j) est le premier paquet inséré à l'étape E42 de la Fig. 4 suivant le paquet p.

$N_i$ est le nombre paquets dans le flux reçu entre les paquets REF(n-1,i) et le paquet p.

Le processeur 300 exécute aux étapes E619b à E621b, parallèlement aux étapes E619 à E621, un horodatage des paquets de l'autre flux reçu de manière similaire à celle décrite pour les étapes 619 à E621. Lorsque les étapes E621 et E621b sont exécutées, le processeur 300 passe à l'étape E622.

Les étapes suivantes E622 à E629 correspondent à la création du flux de référence.

A l'étape suivante E622, le processeur 300 vérifie si un paquet MIP est reçu. Si un paquet MIP est reçu, le processeur 300 passe à l'étape E623.

A l'étape E623, le processeur 300 mémorise le contenu du paquet MIP reçu. Le paquet MIP contient un champ STS ainsi que des informations qui définissent les paramètres de modulation utilisés par le modulateur OFDM 32. Le processeur 300 extrait le champ STS du paquet MIP détecté.

Le champ STS est utilisé, selon la présente invention, comme valeur d'initialisation du compteur PCR pour le premier paquet d'étiquetage temporel pour une diffusion sur une plaque monofréquence. Il est à remarquer ici que le contenu du champ STS n'est pas modifié par le multiplexeur 22 ou 42 et 52.

A l'étape suivante E624, le processeur 300 insère un nombre de paquets nuls entre chaque paquet MIP reçu. Le nombre de paquets insérés dépend des informations qui définissent les paramètres de modulation utilisés par le modulateur OFDM 32 et qui sont comprises dans le ou les paquets MIP reçus.

Le processeur 300 forme ainsi un flux comportant des paquets MIP et des paquets nuls. Ce flux est par exemple appelé flux de référence.

A l'étape E625, le processeur 300 transpose le contenu du champ STS en coups d'horloge à 27MHz.

$$STS_{27}(MIP(n)) = STS(MIP(n)) * 27/10$$

Le champ STS champ est exprimé en pas de 100 ns alors que le compteur PCR est exprimé selon une horloge à 27 MHz.

A l'étape suivante E626, le processeur 300 détermine le modulo du compteur PCR exprimé à partir de l'horloge à 27MHz à partir de la formule suivante :

$$STS_{27}(MIP(n)) = STS(MIP(n)) * 27/10$$

$$PCR(MIP(n)) = PCR_{base}(MIP(n)) * 300 + PCR_{ext}(MIP(n)),$$

*compteur en coup d'horloge à 27Mhz*

$$PCR_{mod}(MIP(n)) = PCR(MIP(n)) modulo(27000000)$$

Le processeur 300 exécute cette étape afin de retrouver la valeur du champ PCR avant le multiplexage par le multiplexeur 22.

A l'étape suivante E627, le processeur 300 convertit le modulo du compteur PCR exprimé à partir de l'horloge à 27MHz dans le format classique d'un compteur PCR, soit un champ de 9 bits qui compte jusqu'à 300 et un champ de 33 bits qui compte les rebouclages du champ de 9 bits.

Comme La valeur $T_{in}(MIP(n))$ est très proche de $PCR(MIP(n))$, le processeur prend la partie $PCR_{sec}$ correspondant à la partie entière en nombre de secondes du champ PCR:
Le processeur 300 calcule :

$$PCR_{subsec}(MIP(n)) = (T_{in}(MIP(n)) modulo 27000000)$$

$$PCR_{sec}(MIP(n)) = T_{in}(MIP(n)) - PCR_{subsec}(MIP(n))$$

$PCR_{subsec}$ correspond à la partie non entière du champ PCR exprimé en secondes.

$PCR_{subsec}$ et $PCR_{sec}$ correspondent à valeur du PCR avant mutiplexage par le multiplexeur 22.

Afin de prendre en compte les changements de seconde lors du passage dans le multiplexeur 22, le traitement suivant est réalisé :

$$Si PCR_{subsec}(MIP(n)) > 0,95 set PCR_{mod}(MIP(n)) < 0,05s$$

$$PCR(MIP(n)) = PCR_{sec}(MIP(n)) + 1 + PCR_{mod}(MIP(n))$$

$$Si PCR_{mod}(MIP(n)) > 0,95 set PCR_{subsec}(MIP(n)) < 0,05s$$

$$PCR(MIP(n)) = PCR_{sec}(MIP(n)) - 1 + PCR_{mod}(MIP(n))$$

*sinon*

$$PCR(MIP(n)) = PCR_{sec}(MIP(n)) + PCR_{mod}(MIP(n))$$

A l'étape suivante E628, le processeur 300 horodate chaque paquet MIP selon la formule suivante :

$$T_{out}(MIP(n)) = PCR(MIP(n))$$

A l'étape suivante E629, le processeur 300 détermine une heure de sortie pour chaque paquet nul inséré: L'heure de sortie $T_{out}(i)$ du paquet i est définie par

$$T_{out}(i) = T_{out}(MIP(n)) + D_{out}(i, MIP(n))$$

$D_{out}(i, MIP(n))$ est l'écart de temps à la sortie du dispositif 30 entre le paquet i et le paquet MIP(n) précédent le paquet i.
Le débit du flux de sortie du dispositif de synchronisation et de filtrage 30 étant connu et fixe et dépendent des paramètres de modulation compris dans les paquets MIP, le temps de transmission $Durée_{paquet}$ d'un paquet TS est donné par :

$$D_{out}(i, MIP(n)) = a * Durée_{paquet}$$

a est le nombre de paquets entre le paquet MIP et le paquet i.
Ainsi, nous avons la formule suivante :

$$T_{out}(i) = PCR(MIP(n)) + a * Durée_{paquet}.$$

L'algorithme de la Fig. 6d est exécuté par le processeur 300 en parallèle avec les étapes de l'algorithme de la Fig. 6a.
A l'étape E630, le processeur 300 reçoit un paquet par l'intermédiaire de l'antenne 31.
A l'étape suivante E631, le processeur 300 effectue un filtrage sur le paquet reçu. Pour cela, le processeur 300 détermine si le paquet reçu est un paquet devant être transmis par le modulateur 32 via l'antenne 33.
Si le paquet reçu est un paquet devant être transmis par le modulateur 32 via l'antenne 33, le processeur 300 mémorise à l'étape E632 le paquet ainsi que son heure de réception calculée à l'étape E621 dans la mémoire RAM 302.
A l'étape suivante E633, le processeur 300 vérifie si un paquet nul inséré à l'étape E624 de l'algorithme de la Fig. 6c a une heure supérieure ou égale à celle du paquet mémorisé à l'étape E632.
Si un paquet nul inséré à l'étape E624 a une heure supérieure ou égale à celle du paquet mémorisé à l'étape E632, le processeur 300 passe à l'étape E634.
A l'étape E634, le processeur 300 insère le paquet mémorisé à l'étape E632 à la place du paquet nul dont l'heure est supérieure ou égale à celle du paquet mémorisé à l'étape E632.
A l'étape E635, le processeur 300 met à jour les champs PCR contenus dans les paquets.
Pour la mise à jour du PCR contenu dans le paquet i, nous avons la formule suivante

$$PCR_{out}(i) = PCR_{in}(i) + T_{out}(i) - T_{in}(i)$$

$$PCR_{out}(i) = PCR_{in}(i) + T_{out}(MIP(n)) + D_{out}(i, MIP(n)) - T_{in}(i)$$

$T_{in}(i)$ est l'heure d'entrée du paquet i et $T_{out}(i)$ est l'heure de sortie du paquet I Sachant que :

$$T_{out}(MIP(n)) = PCR(MIP(n))$$

et

$$T_{out}(i) = PCR(MIP(n)) + a * Durée_{paquet}$$

$$PCR_{out}(i) = PCR_{in}(i) + PCR(MIP(n)) + a * Durée_{paquet} - T_{in}(i)$$

Cette étape effectuée, le processeur 300 retourne à l'étape E633.

L'algorithme de la Fig. 6e est exécuté par le processeur 300 en parallèle avec les étapes de l'algorithme de la Fig. 6a.

A l'étape E640, le processeur 300 effectue une mise en conformité du flux généré par l'algorithme de la Fig. 6d à une norme de transmission par exemple la norme ETSI 13818.

Par exemple, le processeur 300 insère à la place de paquets nuls des tables PSI qui décrivent le contenu du flux transmis.

Par exemple, au démarrage du dispositif de synchronisation et de filtrage 30 ou lors d'une modification des tables, les tables PAT (Program Association Table) PMT (Program Map Table) SDT (Service Description Table) et CAT (Conditionnai access table) sont extraites du flux DTH, les tables sont recalculées et stockées en mémoire. Le filtrage des tables PID (Program Indication Table) est fonction du contenu des PMT des services conservés.

Les compteurs PCR sont en partie codés sur 33 bits avec une horloge de 90Khz. Ainsi, le seizième bit 16 conserve la valeur 0 pendant 728,1 ms et est à 1 pendant 728,1 ms. Par exemple, ce bit peut être utilisé lorsqu'il passe à 0 comme instant d'initialisation pour l'insertion des tables de signalisation.

Par exemple, les tables PAD, SDT sont insérées à chaque instant d'initialisation. A titre d'exemple, les périodes d'insertion des tables peuvent être les suivantes :PAT, PMT, CAT :2,912s /16 : 182 ms : ainsi dans l'intervalle de temps défini par le bit 17 du compteur PCR le processeur 300 insère périodiquement 16 fois ces tables dans chaque période de 2,912s.

SDT : 23,3 s/ 16 = 1,456 s ainsi dans l'intervalle de temps défini par le bit 19 du compteur PCR nous insérons périodiquement 16 fois la table SDT dans chaque période de 2,912s.

NIT (Network Information Table) : 93,2 s/ 16 = 5,825 s. Elle peut être chargée dans l'équipement lors de la configuration.

Les tables TDT (Time Date Table) et TOT (Time Offset Table) sont directement copiées du flux DTH.

L'algorithme de la Fig. 6f est exécuté par le processeur 300 du dispositif de synchronisation et de filtrage 60 en parallèle avec les étapes de l'algorithme de la Fig. 6a.

Les étapes E650 à E653 et E659 à E66 sont exécutées en parallèle pour chaque flux reçu.

A l'étape E650, le processeur 300 reçoit un paquet d'un premier flux par l'intermédiaire de l'antenne 61.

A l'étape suivante E651, le processeur 300 effectue un filtrage sur le paquet reçu. Pour cela, le processeur 300 détermine si le paquet reçu est un paquet devant être transmis par le modulateur 62 via l'antenne 63.

Si le paquet reçu est un paquet devant être transmis par le modulateur 62 via l'antenne 63, le processeur 300 mémorise à l'étape E652 le paquet ainsi que son heure de réception calculée à l'étape E621 dans la mémoire RAM 302.

A l'étape suivante E653, le processeur 300 vérifie si un paquet nul inséré à l'étape E624 de l'algorithme de la Fig. 6c a une heure supérieure ou égale à celle du paquet mémorisé à l'étape E652.

Si un paquet nul inséré à l'étape E624 a une heure supérieure ou égale à celle du paquet mémorisé à l'étape E652, le processeur 300 passe à l'étape E654. Dans la négative, le processeur 300 retourne à l'étape E653 pour traiter un nouveau paquet reçu et traité aux étapes E651 et E652.

A l'étape E659, le processeur 300 reçoit un paquet d'un premier flux par l'intermédiaire de l'antenne 61.

A l'étape suivante E660, le processeur 300 effectue un filtrage sur le paquet reçu. Pour cela, le processeur 300 détermine si le paquet reçu est un paquet devant être transmis par le modulateur 62 via l'antenne 63.

Si le paquet reçu est un paquet devant être transmis par le modulateur 62 via l'antenne 63, le processeur 300 mémorise à l'étape E661 le paquet ainsi que son heure de réception calculée à l'étape E621b dans la mémoire RAM 302.

A l'étape suivante E662, le processeur 300 vérifie si un paquet nul inséré à l'étape E624 de l'algorithme de la Fig. 6c a une heure supérieure ou égale à celle du paquet mémorisé à l'étape E661.

Si un paquet nul inséré à l'étape E624 a une heure supérieure ou égale à celle du paquet mémorisé à l'étape E661, le processeur 300 passe à l'étape E654. Dans la négative, le processeur 300 retourne à l'étape E662 pour traiter un nouveau paquet reçu et traité aux étapes E660 et E661.

A l'étape E654, le processeur 300 compare l'heure du paquet mémorisé à l'étape E652 avec l'heure du paquet mémorisé à l'étape E661.

Si l'heure du paquet mémorisé à l'étape E652 et l'heure du paquet mémorisé à l'étape E661 sont identiques, le processeur 300 passe à l'étape E655. Si l'heure du paquet mémorisé à l'étape E652 et l'heure du paquet mémorisé à l'étape E661 sont différentes, le processeur 300 passe à l'étape E656.

A l'étape E655, le processeur 300 sélectionne un des paquets mémorisés à l'étape E652 ou E661 et passe à l'étape E657. La sélection est par exemple définie selon une contrainte donnée par l'utilisateur du système.

A l'étape E656, le processeur 300 sélectionne le paquet mémorisé à l'étape E652 ou E661 qui a l'heure la plus ancienne et passe à l'étape E657.

A l'étape E657, le processeur 300 insère le paquet sélectionné à l'étape E655 ou E656 à la place du paquet nul dont l'heure est supérieure ou égale à celle du paquet sélectionné à l'étape E655 ou E656.

A l'étape E658, le processeur 300 met à jour les champs PCR contenus dans les paquets.

Pour la mise à jour du PCR contenu dans le paquet i, nous avons la formule suivante

$$PCR_{out}(i) = PCR_{\text{in}}(i) + T_{out}(i) - T_{\text{in}}(i)$$

$$PCR_{out}(i) = PCR_{\text{in}}(i) + T_{out}(MIP(n)) + D_{out}(i, MIP(n)) - T_{\text{in}}(i)$$

$T_{\text{in}}(i)$ est l'heure d'entrée du paquet i et $T_{\text{out}}(i)$ est l'heure de sortie du paquet I Sachant que :

$$T_{out}(MIP(n)) = PCR(MIP(n))$$

et

$$T_{out}(i) = PCR(MIP(n)) + a * Durée_{paquet}$$

$$PCR_{out}(i) = PCR_{\text{in}}(i) + PCR(MIP(n)) + a * Durée_{paquet} - T_{\text{in}}(i)$$

Cette étape effectuée, le processeur 300 retourne à l'étape E653 et à l'étape E662.

Comme décrit ci-dessus par exemple en lien avec les Figures 1 à 5, un procédé de génération d'un marquage temporel pour une diffusion terrestre synchrone au sein d'au moins une plaque mono fréquence d'au moins un flux audiovisuel via au moins une liaison dans laquelle le au moins un flux audiovisuel est multiplexé avec au moins un autre flux audiovisuel diffusé par la au moins une liaison, permet de synchroniser le flux audiovisuel pour une diffusion de celui-ci.

Le procédé comporte les étapes de :

- insertion de paquets comportant au moins une information représentative d'une horloge de référence commune précise,
- détection dans le flux audiovisuel d'au moins un paquet comportant une information représentative du nombre de jours écoulés depuis une date prédéterminée,
- calcul du nombre de rebouclages d'un compteur pendant une durée déterminée à partir de l'information représentative du nombre de jours écoulés depuis une date prédéterminée,
- mise à jour du compteur à chaque paquet du flux audiovisuel transmis,
- insertion d'au moins un paquet comportant la valeur du compteur mise à jour dans le flux audiovisuel pour former un flux audiovisuel modifié,
- transmission du flux audiovisuel modifié pour une diffusion dudit flux audiovisuel modifié.

Corrélativement, un dispositif de génération d'un marquage temporel pour une diffusion terrestre synchrone au sein d'au moins une plaque mono fréquence d'au moins un flux audiovisuel via au moins une liaison dans laquelle le au moins un flux audiovisuel est multiplexé avec au moins un autre flux audiovisuel diffusé par la au moins une liaison, peut comporter :

- des moyens d'insertion de paquets comportant au moins une information représentative d'une horloge de référence commune précise,
- des moyens de détection dans le flux audiovisuel d'au moins un paquet comportant une information représentative du nombre de jours écoulés depuis une date prédéterminée,
- des moyens de calcul du nombre de rebouclages d'un compteur pendant une durée déterminée à partir de l'information représentative du nombre de jours écoulés depuis une date prédéterminée,
- des moyens de mise à jour du compteur à chaque paquet du flux audiovisuel transmis,
- des moyens d'insertion d'au moins un paquet comportant la valeur du compteur mise à jour dans le flux audiovisuel pour former un flux audiovisuel modifié,
- des moyens de transmission du flux audiovisuel modifié pour une diffusion satellitaire dudit flux audiovisuel modifié.

Ainsi, il est possible de synchroniser le flux audiovisuel pour une diffusion de celui-ci.

Selon un mode particulier, le ou chaque paquet inséré comportant la valeur du compteur mise à jour est inséré dans le flux audiovisuel à la place d'un paquet nul du flux audiovisuel et selon une périodicité donnée.

Ainsi, la taille du flux audiovisuel est conservée.

Selon un mode particulier, chaque paquet comportant la valeur du compteur mise à jour a le même identifiant, différent des autres identifiants compris dans le flux audiovisuel.

Ainsi, il est possible de reconnaître aisément chaque paquet comportant la valeur du compteur mise à jour parmi l'ensemble des paquets reçus.

Selon un mode particulier, le calcul du nombre de rebouclages du compteur pendant la durée déterminée à partir de l'information représentative du nombre de jours écoulés depuis une date prédéterminée est effectué en :

- convertissant la durée déterminée en nombre de coups d'une horloge du compteur,
- calculant le nombre de coups d'horloge du compteur équivalent à la période du compteur,
- en convertissant le contenu d'un champ du paquet comportant au moins une information représentative d'une horloge de référence commune précise en coups d'horloge du compteur.

Ainsi, il est possible de synchroniser le flux audiovisuel pour une diffusion de celui-ci.

## Revendications

**1.** Procédé de filtrage et de synchronisation d'au moins un flux audiovisuel pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison, **caractérisé en ce que** le procédé comporte les étapes de :

- filtrage (E651), parmi les paquets reçus via la au moins une liaison, des paquets audiovisuels destinés à la diffusion terrestre synchrone au sein d'au moins une plaque mono fréquence,
- horodatage (E621) des paquets filtrés,
- détection (E600, E603) de paquets comportant un compteur, calcul (E606) de la durée entre deux paquets comportant un compteur et comptage (E604) des paquets entre les deux paquets comportant un compteur,
- détection (E623) de paquets comportant au moins une information représentative d'une horloge de référence commune,
- insertion (E624) de paquets nuls entre chaque paquet comportant au moins une information représentative d'une horloge de référence commune,
- horodatage (E629) de chaque paquet nul,
- remplacement (E634) d'un paquet nul horodaté par un paquet filtré si le paquet nul a un horodatage supérieur à celui du paquet reçu filtré,
- mise à jour (E658) d'au moins un paquet comportant un compteur dans le flux audiovisuel pour former un flux audiovisuel pour la diffusion terrestre synchrone au sein d'au moins une plaque mono fréquence.

**2.** Procédé selon la revendication 1, **caractérisé en ce que** le procédé comporte en outre une étape (E640) de mise en conformité du flux audiovisuel pour la diffusion terrestre synchrone au sein d'au moins une plaque mono fréquence à une norme de transmission.

**3.** Procédé selon la revendication 2, **caractérisé en ce que** plusieurs tables sont insérées (E640) dans le flux audiovisuel pour la diffusion terrestre synchrone au sein d'au moins une plaque mono fréquence à une périodicité qui dépend de la périodicité d'au moins un bit du compteur.

**4.** Procédé selon l'une quelconque des revendications 1 à 3, **caractérisé en ce que** au moins une liaison est une liaison satellitaire.

**5.** Procédé selon l'une quelconque des revendications 1 à 4, **caractérisé en ce que** l'horodatage (E629) de chaque paquet nul est fonction d'un compteur du paquet le précédant qui comporte au moins une information représentative d'une horloge de référence commune et est fonction d'un nombre de paquets entre ce paquet le précédant et ledit paquet nul.

**6.** Procédé selon l'une quelconque des revendications 1 à 5, **caractérisé en ce que** l'horodatage (E621) des paquets filtrés comprend l'horodatage de chaque paquet reçu en fonction de la durée calculée et du nombre de paquets décomptés.

**7.** Procédé selon la revendication 6, **caractérisé en ce que** l'horodatage (E621) de chaque paquet reçu est également fonction du compteur du premier paquet à partir duquel la durée est calculée.

**8.** Procédé selon l'une quelconque des revendications 1 à 7, **caractérisé en ce que** le procédé comporte en outre les étapes suivantes :

- filtrage (E660), parmi des paquets d'un second flux audiovisuel reçus via la au moins une liaison, de paquets audiovisuels destinés à la diffusion terrestre synchrone au sein d'au moins une plaque mono fréquence,
- détection (E600, E603), parmi les paquets du second flux audiovisuel reçus via la au moins une liaison, de paquets comportant un compteur, calcul (E606) de la durée, dite second durée, entre deux paquets comportant un compteur et comptage (E604) des paquets du second flux audiovisuel entre les deux paquets comportant un compteur,
- horodatage (E661) de chaque paquet reçu du second flux audiovisuel en fonction de la seconde durée calculée et du nombre de paquets décomptés du second flux audiovisuel,
procédé dans lequel le remplacement d'un paquet nul horodaté comprend la sélection (E656) d'un paquet ayant l'horodatage le plus ancien entre un paquet filtré du flux audiovisuel et un paquet filtré du second flux audiovisuel et l'insertion (E657) du paquet sélectionné à place du paquet nul dont l'horodatage est supérieur à celui du paquet sélectionné.

**9.** Procédé selon l'une quelconque des revendications 1 à 8, **caractérisé en ce que** la mise à jour (E658) d'au moins un paquet comportant un compteur comprend le calcul d'un champ PCR selon la formule suivante :
$PCR_{out}(i) = PCR_{in}(i) + T_{out}(i) - T_{in}(i)$ où i identifie le paquet, $PCR_{out}(i)$ est le champ PCR mis à jour du paquet, $PCR_{in}(i)$ est un champ PCR du paquet avant mise à jour, $T_{out}(i)$ est une heure de sortie du paquet et $T_{in}(i)$ est une heure d'arrivée du paquet.

**10.** Dispositif de filtrage et de synchronisation d'un flux audiovisuel (30) pour une diffusion terrestre synchrone au sein d'au moins une plaque mono fréquence, le flux audiovisuel étant reçu via au moins une liaison dans laquelle le au moins un flux audiovisuel est multiplexé avec au moins un autre flux audiovisuel diffusé par la au moins une liaison, **caractérisé en ce que** le dispositif comporte :

- des moyens de filtrage parmi les paquets reçus via la au moins une liaison des paquets audiovisuels destinés à la diffusion terrestre synchrone au sein d'au moins une plaque mono fréquence ;
- des moyens d'horodatage des paquets filtrés,
- des moyens de détection de paquets comportant un compteur, calcul de la durée entre deux paquets comportant un compteur et comptage des paquets entre les deux paquets comportant un compteur,
- des moyens de détection de paquets comportant au moins une information représentative d'une horloge de référence commune,
- des moyens d'insertion de paquets nuls entre chaque paquet comportant au moins une information représentative d'une horloge de référence commune,
- des moyens d'horodatage de chaque paquet nul,
- des moyens de remplacement d'un paquet nul horodaté par un paquet filtré si le paquet nul a un horodatage supérieur à celui du paquet reçu filtré,

- des moyens de mise à jour d'au moins un paquet comportant un compteur dans le flux audiovisuel pour former un flux audiovisuel pour la diffusion terrestre synchrone au sein d'au moins une plaque mono fréquence.

20

21a
Encodeur S1'

21b
Encodeur S2'

21c
Encodeur S3'

22
Multiplexeur et
transmission satellite

23
Services
Terrestres

25

10

11a
EncodeurT1'

11b
Encodeur T2'

11c
Encodeur T3'

13
Mux

15
Etiquetage
temporel

14
Insertion
MIP

Fig. 1a

31    30
Synchro

32
Modulateur
OFDM

33

42    40

41a

Encodeur

41b

Encodeur

41c

Encodeur

Multiplexeur et
Transmission satellite

45

50

54                          55

Insertion
MIP

Etiquetage
temporel

51a

Encodeur

51b

Encodeur

51c

Encodeur

52

Multiplexeur et
Transmission satellite

61    60              62        63

Synchro

Modulateur
OFDM

# Fig. 1b

200 — Processeur

202 — RAM

203 — ROM

201

Interface sortie — 205

15

Fig. 2

300 — Processeur

302 — RAM

303 — ROM

301

Interface entrée — 304

Interface sortie — 305

30

Fig. 3

E400 — Multiplexage flux(s) Terrestre(s)

E401 — Insertion paquet MIP

E402 — Insertion composant PCR

E403 — Transfert pour diffusion satellite

E404 — Multiplexages flux

E405 — Modification PCR

E406 — Diffusion

# Fig. 4a

E451 — Insertion paquet MIP

E452 — Insertion composant PCR

E453 — Transfert pour diffusion satellite

E454 — Muliplexages flux

E464 — Muliplexages flux

E455 — Modification PCR

E465 — Modification PCR

E456 — Diffusion

E466 — Diffusion

Fig. 4b

Fig. 5

Fig. 6a

Fig. 6b

E619 — Calcul rebouclages PCR

E620 — Référence= 1$^{er}$ PCR

E621 — Horodatage de chaque paquet

E622 — Paquet MIP

E623 — Mémorisation contenu paquet

E624 — Insertion paquets nuls

E625 — Conversion STS en 27MHz

E626 — Détermination PCR modulo

E627 — Conversion PCR

E628 — Horodatage paquet MIP

E629 — Détermination heure sortie paquets nuls insérés

Fig. 6c

E630 — Réception paquet

E631 — Filtrage

E632 — Mémorisation paquet avec heure arrivée

E633 — Paquet nul à heure> paquet mémorisé?

E634 — Insertion dans flux place paquet nul

E635 — Mise à jour champs PCR Paquets insérés

## Fig. 6d

E640 — Mise conformité norme

E641 — Transfert

## Fig. 6e

Fig. 6f

Europäisches
Patentamt

European
Patent Office

Office européen
des brevets

# RAPPORT DE RECHERCHE EUROPEENNE

Numéro de la demande

EP 19 17 6916

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/116743 A1 (VIPS T [NO]; STEPHANSEN HELGE [NO]; JENSEN BJOERN TOMMY [NO]; ROGNSTAD) 7 septembre 2012 (2012-09-07)<br>* page 2, ligne 8 - ligne 24 *<br>* page 5, ligne 28 *<br>* page 5, ligne 33 - ligne 35 *<br>* page 6, ligne 18 - ligne 27 *<br>* page 7, ligne 10 - ligne 12 *<br>* page 7, ligne 15 - ligne 17 *<br>* page 7, ligne 30 - ligne 34 *<br>* page 8, ligne 2 - ligne 3 *<br>* page 8, ligne 18 - ligne 20 *<br>* page 8, ligne 24 - ligne 35 *<br>* figure 4 *<br>-----| 1-6,9,10 | INV.<br>H04N21/236<br>H04H20/67<br>H04H60/40<br>H04N21/23<br>H04N21/234<br>H04N21/61 |
| A | WO 2010/043498 A1 (TDF [FR]; DUPAIN PASCAL [FR]) 22 avril 2010 (2010-04-22)<br>* page 16, ligne 31 - page 17, ligne 13 *<br>* page 18, ligne 22 - page 20, ligne 14 *<br>* figures 6,8,9 *<br>-----| 1-10 | |
| A | WO 2007/147706 A1 (TDF [FR]; DUPAIN PASCAL [FR]) 27 décembre 2007 (2007-12-27)<br>* page 11, ligne 18 - page 17, ligne 29; figures 2-6 *<br>-----| 1-10 | |
| A | US 2008/310460 A1 (BARGAUAN MICHELE [IT]) 18 décembre 2008 (2008-12-18)<br>* alinéas [0016] - [0030]; figure 1 *<br>-----| 1-10 | |
| A | TOMMY JENSEN: "LOCAL CONTENT IN DVB-T2 SYSTEMS WITH SFN",<br>INTERNATIONAL BROADCASTING CONFERENCE 2012; 12-9-2012 - 17-9-2012; AMSTERDAM,,<br>12 septembre 2012 (2012-09-12),<br>XP030082400,<br>* le document en entier *<br>-----<br>-/-- | 1-10 | |

DOMAINES TECHNIQUES
RECHERCHES (IPC)

H04N
H04H

Le présent rapport a été établi pour toutes les revendications

| Lieu de la recherche | Date d'achèvement de la recherche | Examinateur |
|---|---|---|
| Munich | 28 juin 2019 | Seeger, Alexander |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 17 6916

| | | DOCUMENTS CONSIDERES COMME PERTINENTS | | |
|---|---|---|---|---|
| Catégorie | Citation du document avec indication, en cas de besoin, des parties pertinentes | | Revendication concernée | CLASSEMENT DE LA DEMANDE (IPC) |
| A | "Digital Video Broadcasting (DVB); DVB mega-frame for Single Frequency Network (SFN) synchronization; ETSI TS 101 191", IEEE, LIS, SOPHIA ANTIPOLIS CEDEX, FRANCE, vol. BC, no. V1.4.1, 1 juin 2004 (2004-06-01), XP014015853, ISSN: 0000-0001 * le document en entier * ----- | | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 28 juin 2019 | Seeger, Alexander |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 19 17 6916

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-06-2019

| Document brevet cité au rapport de recherche | | Date de publication | Membre(s) de la famille de brevet(s) | | Date de publication |
|---|---|---|---|---|---|
| WO 2012116743 | A1 | 07-09-2012 | EA | 201391247 A1 | 28-02-2014 |
| | | | EP | 2681858 A1 | 08-01-2014 |
| | | | ES | 2632344 T3 | 12-09-2017 |
| | | | WO | 2012116743 A1 | 07-09-2012 |
| | | | ZA | 201306381 B | 28-01-2015 |
| WO 2010043498 | A1 | 22-04-2010 | EP | 2347588 A1 | 27-07-2011 |
| | | | FR | 2937490 A1 | 23-04-2010 |
| | | | WO | 2010043498 A1 | 22-04-2010 |
| WO 2007147706 | A1 | 27-12-2007 | EP | 2030449 A1 | 04-03-2009 |
| | | | FR | 2902591 A1 | 21-12-2007 |
| | | | WO | 2007147706 A1 | 27-12-2007 |
| US 2008310460 | A1 | 18-12-2008 | AT | 525819 T | 15-10-2011 |
| | | | BR | PI0813505 A2 | 06-01-2015 |
| | | | BR | PI0813506 A2 | 15-12-2015 |
| | | | CA | 2689541 A1 | 02-04-2009 |
| | | | CA | 2689574 A1 | 26-03-2009 |
| | | | EP | 2163016 A2 | 17-03-2010 |
| | | | EP | 2165442 A2 | 24-03-2010 |
| | | | US | 2008310460 A1 | 18-12-2008 |
| | | | US | 2008310533 A1 | 18-12-2008 |
| | | | WO | 2009037597 A2 | 26-03-2009 |
| | | | WO | 2009040680 A2 | 02-04-2009 |

EPO FORM P0460

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Digital Video Broadcasting (DVB); DVB mega-frame for Single Frequency Network (SFN) synchronization Modulator Interface (T2-MI) for a second génération digital terrestrial télévision broadcasting System (DVB-T2). ETSI TS 102 773 V1.1.1. European Télécommunications Standards Institute, Septembre 2009